(19) **Europäisches Patentamt**
**European Patent Office**
**Office européen des brevets**

(11) **EP 4 757 477 A1**

(12) **EUROPEAN PATENT APPLICATION**
published in accordance with Art. 153(4) EPC

(43) Date of publication:
**10.06.2026 Bulletin 2026/24**

(21) Application number: **24858101.9**

(22) Date of filing: **15.07.2024**

(51) International Patent Classification (IPC):
**H04W 72/40** (2023.01)

(52) Cooperative Patent Classification (CPC):
**H04W 72/044; H04W 72/12; H04W 72/40**

(86) International application number:
**PCT/CN2024/105553**

(87) International publication number:
**WO 2025/044557 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.08.2023 CN 202311128795**

(71) Applicant: **HUAWEI TECHNOLOGIES CO., LTD.
Shenzhen 518129 (CN)**

(72) Inventors:
• **QI, Hong**
**Shenzhen, Guangdong 518129 (CN)**
• **ZHANG, Yi**
**Shenzhen, Guangdong 518129 (CN)**
• **SU, Hongjia**
**Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND APPARATUS**

(57) A communication method and apparatus are provided, to reduce resource overheads of a data transmission and reduce a delay. A first terminal device and at least one second terminal device receive downlink control information from a network device, where scrambling information of the downlink control information is related to the first terminal device and the at least one second terminal device; and the first terminal device and the at least one second terminal device decodes the scrambling information of the downlink control information. Because the scrambling information of the downlink control information is related to the first terminal device and the at least one second terminal device, the first terminal device and the at least one second terminal device can successfully decode the downlink control information. In this way, the first terminal device needs to send only one uplink resource request, and the network device needs to indicate only one piece of downlink control information to schedule one corresponding resource, so that the network device and the second terminal device simultaneously receive, on the corresponding resource, data sent by the first terminal device, thereby reducing resource overheads and reducing a scheduling delay.

FIG. 4

**Description**

CROSS-REFERENCE TO RELATED APPLICATIONS

This application claims priority to Chinese Patent Application No. 202311128795.X, filed with the China National Intellectual Property Administration on August 31, 2023 and entitled "COMMUNICATION METHOD AND APPARATUS", which is incorporated herein by reference in its entirety.

TECHNICAL FIELD

This application relates to the field of communication technologies, and in particular, to a communication method and apparatus.

BACKGROUND

Currently, in a scenario including both a Uu-interface uplink/downlink scheduling transmission and a sidelink transmission, resources for the Uu-interface uplink/downlink scheduling transmission and resources for the sidelink transmission are scheduled independently. For example, if a terminal device needs to send uplink data and sidelink data, the terminal device needs to separately request resources from a network device. The network device separately indicates corresponding resources through different downlink control information (downlink control information, DCI), and then the terminal device sends the data to the network device and a sidelink receiving terminal device on the corresponding resources. The foregoing data transmission method results in high resource overheads and a long delay.

SUMMARY

This application provides a communication method and apparatus, to reduce resource overheads of a data transmission and reduce a delay.

According to a first aspect, this application provides a communication method. The method may be applied to a first terminal device or a processor, a chip, a functional module, or the like in the first terminal device. The method may include: receiving downlink control information from a network device, and decoding scrambling information of the downlink control information. The scrambling information of the downlink control information is related to a first terminal device and at least one second terminal device, the downlink control information is used to schedule a first resource, and the first resource is used by the first terminal device to send information to the at least one second terminal device and/or the network device.

In the foregoing method, because the scrambling information of the downlink control information is related to the first terminal device and the at least one second terminal device, the first terminal device and the at least one second terminal device can successfully decode the downlink control information. In this way, the first terminal device needs to send only one uplink resource request, and the network device needs to indicate only one piece of downlink control information to schedule one corresponding resource, so that the network device receives, on the corresponding resource, data sent by the first terminal device, and simultaneously, the at least one second terminal device also receives, on the corresponding resource, the data sent by the first terminal device, thereby reducing resource overheads and reducing a scheduling delay.

In a possible design, the scrambling information may include a first information field and a second information field, the first information field is scrambled by using a first identifier, the second information field is scrambled by using a second identifier, the first identifier identifies the first terminal device, and the second identifier identifies the at least one second terminal device. In this way, the scrambling information includes information scrambled by using the first identifier and information scrambled by using the second identifier, so that both the first terminal device and the at least one second terminal device can subsequently decode corresponding scrambling information.

In a possible design, a bit position occupied by the first information field is before a bit position occupied by the second information field.

In a possible design, the bit position occupied by the first information field indicates the first terminal device to send information on the first resource, and the bit position occupied by the second information field indicates the at least one second terminal device to receive information sent by the first terminal device. In this way, the bit position occupied by the first information field and the bit position occupied by the second information field may be used to determine which data is scrambled by using a transmit end identifier and which data is scrambled by using a receive end identifier, so that the first terminal device and the at least one second terminal device successfully perform decoding.

In a possible design, the scrambling information of the downlink control information may be decoded by using the following method: decoding the first information field based on the first identifier. In this way, the first terminal device can accurately decode the scrambling information.

In a possible design, the first information field includes information indicating that partial data of a cyclic redundancy check code is scrambled, and the second information field includes information indicating that partial data of the cyclic redundancy check code is scrambled. In this way, the first terminal device and the at least one second terminal device can subsequently obtain same information through decoding, to decode the downlink control information.

In a possible design, lengths of the bit position occupied by the first information field and the bit position occupied by the second information field are predefined, configured, or preconfigured.

In a possible design, the second identifier may be sent to the network device, so that the network device can scramble the second information field by using the second identifier.

In a possible design, either of the first identifier and the second identifier includes one of the following: a cell radio network temporary identifier C-RNTI, a temporary cell radio network temporary identifier TC-RNTI, a unicast identifier, a multicast identifier, or a broadcast identifier.

In a possible design, the scrambling information is scrambled by using a third identifier, and the third identifier identifies the first terminal device and the at least one second terminal device. In this way, the scrambling information includes information scrambled by using the third identifier, so that both the first terminal device and the at least one second terminal device can subsequently decode corresponding scrambling information.

In a possible design, the scrambling information of the downlink control information may be decoded by using the following method: decoding the scrambling information of the downlink control information based on the third identifier. In this way, the first terminal device can accurately decode the scrambling information.

In a possible design, an identifier of the at least one second terminal device may be sent to the network device, and the third identifier is received from the network device. In this way, the network device can perform scrambling by using the third identifier related to both the first terminal device and the at least one second terminal device, and the first terminal device can successfully decode the scrambling information by using the third identifier.

In a possible design, indication information may be sent to the network device, where the indication information indicates the network device to generate the third identifier based on an identifier of the first terminal device and the identifier of the at least one second terminal device. In this way, the network device can perform scrambling by using the third identifier related to both the first terminal device and the at least one second terminal device.

In a possible design, information indicating that the third identifier is received may be sent to the network device. In this way, information of the network device can be aligned with information of the first terminal device.

In a possible design, the identifier of the at least one second terminal device includes one of the following: a cell radio network temporary identifier C-RNTI, a temporary cell radio network temporary identifier TC-RNTI, a unicast identifier, a multicast identifier, or a broadcast identifier.

According to a second aspect, this application provides a communication method. The method may be applied to a network device or a processor, a chip, a functional module, or the like in the network device. The method may include: determining downlink control information, and sending the downlink control information to a first terminal device and at least one second terminal device. The downlink control information is used to schedule a first resource, scrambling information of the downlink control information is related to the first terminal device and the at least one second terminal device, and the first resource is used by the first terminal device to send information to the at least one second terminal device and/or the network device.

In the foregoing method, because the scrambling information of the downlink control information is related to the first terminal device and the at least one second terminal device, the first terminal device and the at least one second terminal device can successfully decode the downlink control information. In this way, the first terminal device needs to send only one uplink resource request, and the network device needs to indicate only one piece of downlink control information to schedule one corresponding resource, so that the network device receives, on the corresponding resource, data sent by the first terminal device, and the at least one second terminal device also receives, on the corresponding resource, the data sent by the first terminal device, thereby reducing resource overheads and reducing a scheduling delay.

In a possible design, the scrambling information includes a first information field and a second information field, the first information field is scrambled by using a first identifier, the second information field is scrambled by using a second identifier, the first identifier identifies the first terminal device, and the second identifier identifies the at least one second terminal device. In this way, the scrambling information includes information scrambled by using the first identifier and information scrambled by using the second identifier, so that both the first terminal device and the at least one second terminal device can subsequently decode corresponding scrambling information.

In a possible design, a bit position occupied by the first information field is before a bit position occupied by the second information field.

In a possible design, the bit position occupied by the first information field indicates the first terminal device to send information on the first resource, and the bit position occupied by the second information field indicates the at least one second terminal device to receive information sent by the first terminal device. In this way, the bit position occupied by the first information field and the bit position occupied by the second information field may be used to determine which data is scrambled by using a transmit end identifier and which data is scrambled by using a receive end identifier, so that the first terminal device and the at least one second terminal device successfully perform decoding.

In a possible design, the first information field includes information indicating that partial data of a cyclic redundancy check code is scrambled, and the second information field includes information indicating that partial data of the cyclic redundancy check code is scrambled. In this way, the first terminal device and the at least one second terminal device can subsequently obtain same information through decoding, to decode the downlink control information.

In a possible design, lengths of the bit position occupied by the first information field and the bit position occupied by the second information field are predefined, configured, or preconfigured.

In a possible design, the second identifier is received from the first terminal device, so that the network device can scramble the second information field by using the second identifier.

In a possible design, either of the first identifier and the second identifier includes one of the following: a cell radio network temporary identifier C-RNTI, a temporary cell radio network temporary identifier TC-RNTI, a unicast identifier, a multicast identifier, or a broadcast identifier.

In a possible design, the scrambling information is scrambled by using a third identifier, and the third identifier identifies the first terminal device and the at least one second terminal device. In this way, the scrambling information includes information scrambled by using the third identifier, so that both the first terminal device and the at least one second terminal device can subsequently decode corresponding scrambling information.

In a possible design, an identifier of the at least one second terminal device is received from the first terminal device; the third identifier is generated based on an identifier of the first terminal device and the identifier of the at least one second terminal device; and the third identifier is sent to the first terminal device and the at least one second terminal device. In this way, the network device can perform scrambling by using the third identifier related to both the first terminal device and the at least one second terminal device, and the first terminal device can successfully decode the scrambling information by using the third identifier.

In a possible design, indication information is received from the first terminal device, where the indication information indicates the network device to generate the third identifier based on the identifier of the first terminal device and the identifier of the at least one second terminal device. In this way, the network device can perform scrambling by using the third identifier related to both the first terminal device and the at least one second terminal device.

In a possible design, information indicating that the third identifier is received is received from the first terminal device and the at least one second terminal device. In this way, information of the network device can be aligned with information of the first terminal device.

In a possible design, the identifier of the at least one second terminal device is one of the following: a cell radio network temporary identifier C-RNTI, a temporary cell radio network temporary identifier TC-RNTI, a unicast identifier, a multicast identifier, or a broadcast identifier.

According to a third aspect, this application further provides a communication apparatus. The communication apparatus may be used in a first terminal device, and the communication apparatus has a function of implementing the method in the first aspect or the possible design examples of the first aspect. The function may be implemented by hardware, or may be implemented by hardware executing corresponding software. The hardware or the software includes one or more modules corresponding to the foregoing function.

In a possible design, a structure of the communication apparatus may include a transceiver unit and a processing unit. These units may perform detailed descriptions in the first aspect or the possible design examples of the first aspect. Details are not described herein again.

In a possible design, the structure of the communication apparatus includes a processor, and optionally further includes a memory and/or a transceiver. The transceiver is configured to receive/send a signal, data, a message, information, or the like, and is configured to communicate and interact with another device in a communication system. The processor is configured to support the communication apparatus in performing the corresponding function in the first aspect or the possible design examples of the first aspect. The memory is coupled to the processor, and stores program instructions and data that are necessary for the communication apparatus.

According to a fourth aspect, this application further provides a communication apparatus. The communication apparatus may be used in a network device, and the communication apparatus has a function of implementing the method in the second aspect or the possible design examples of the second aspect. The function may be implemented by hardware, or may be implemented by hardware executing corresponding software. The hardware or the software includes one or more modules corresponding to the foregoing function.

In a possible design, a structure of the communication apparatus may include a transceiver unit and a processing unit. These units may perform detailed descriptions in the second aspect or the possible design examples of the second aspect. Details are not described herein again.

In a possible design, the structure of the communication apparatus includes a processor, and optionally further includes a memory and/or a transceiver. The transceiver is configured to receive/send a signal, data, a message, information, or the like, and is configured to communicate and interact with another device in a communication system. The processor is configured to support the communication apparatus in performing the corresponding function in the second aspect or the possible design examples of the second aspect. The memory is coupled to the processor, and stores program instructions and data that are necessary for the communication apparatus.

According to a fifth aspect, an embodiment of this application provides a communication system. The communication system may include a first terminal device, a network device, and the like. The first terminal device is configured to implement the method in the first aspect or the possible design examples of the first aspect. The network device is configured to implement the method in the second aspect or the possible design examples of the second aspect.

In a possible design, the communication system may further include at least one second terminal device.

According to a sixth aspect, an embodiment of this application provides a computer-readable storage medium. The computer-readable storage medium stores program instructions, and when the program instructions are run on a computer, the computer is cause to perform the method in the first aspect and any possible design of the first aspect, or the method in the second aspect and any possible design of the second aspect in embodiments of this application. For example, the computer-readable storage medium may be any usable medium that can be accessed by the computer. By way of example but not limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

According to a seventh aspect, an embodiment of this application provides a computer program product, including instructions. When the instructions are run on a computer, the method in the first aspect or any possible design of the first aspect, or the method in the second aspect or any possible design of the second aspect is performed.

According to an eighth aspect, this application further provides a chip, including a processor. The processor is coupled to a memory, and is configured to read and execute program instructions stored in the memory, to cause the chip to implement the method in the first aspect or any possible design of the first aspect, or the method in the second aspect or any possible design of the second aspect.

For each of the third aspect to the eighth aspect and technical effects that can be achieved in the aspect, refer to the foregoing descriptions of the technical effects that can be achieved in the first aspect, the possible solutions in the first aspect, the second aspect, or the possible solutions in the second aspect. Details are not described herein again.

BRIEF DESCRIPTION OF DRAWINGS

FIG. 1 is a diagram of an architecture of a communication system according to an embodiment of this application;
FIG. 2 is a diagram of resource scheduling according to the conventional technology;
FIG. 3 is a diagram of resource scheduling according to an embodiment of this application;
FIG. 4 is a flowchart of a communication method according to an embodiment of this application;
FIG. 5 is a diagram of a process of adding CRC to downlink control information according to an embodiment of this application;
FIG. 6 is a diagram of scrambling according to the conventional technology;
FIG. 7 is a diagram of scrambling according to an embodiment of this application;
FIG. 8 is a diagram of identifier reporting and delivery according to this application;
FIG. 9 is a diagram of a structure of a communication apparatus according to this application; and
FIG. 10 is a diagram of a structure of a communication apparatus according to this application.

DESCRIPTION OF EMBODIMENTS

The following further describes in detail this application with reference to accompanying drawings.

Embodiments of this application provide a communication method and apparatus, to reduce resource overheads of a data transmission and reduce a delay. The method and the apparatus in this application are based on the same technical concept. Because problem-resolving principles of the method and the apparatus are similar, mutual reference may be made to implementation of the apparatus and the method, and repeated parts are not described.

In the descriptions of this application, terms such as "first" and "second" are merely used for differentiated description, and cannot be understood as an indication or implication of relative importance, or cannot be understood as an indication or implication of an order.

In the descriptions of this application, "at least one (type)" means one (type) or more (types), and "a plurality of (types)" means two (types) or more (types). "At least one of the following items" or a similar expression thereof means any combination of these items, including any combination of singular items or plural items. For example, at least one of a, b, or

EP 4 757 477 A1

c may indicate a, b, c, a and b, a and c, b and c, or a, b, and c, where a, b, and c may be singular or plural.

In the descriptions of this application, "and/or" describes an association relationship between associated objects, and represents that three relationships may exist. For example, A and/or B may represent the following cases: Only A exists, both A and B exist, and only B exists, where A and B may be singular or plural. "/" indicates "or". For example, a/b indicates a or b.

To describe the technical solutions in embodiments of this application more clearly, the following describes a communication method and apparatus provided in embodiments of this application in detail with reference to the accompanying drawings.

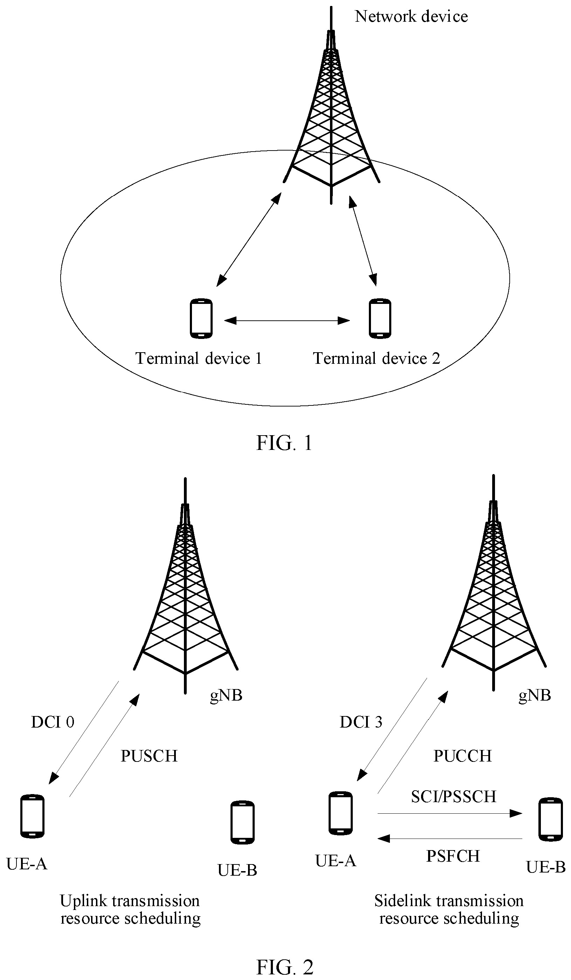

FIG. 1 shows an architecture of a possible communication system to which the communication method provided in this application is applicable. The communication system may include a network device and at least one terminal device. In FIG. 1, two terminal devices (a terminal device 1 and a terminal device 2 shown in FIG. 1) are used as an example for description. In the communication system, the at least one terminal device is located in a coverage area of the network device. The communication system may be understood as an architecture integrating a sidelink transmission and an uplink transmission. In the communication system, the sidelink transmission and the uplink transmission may not be distinguished, and a physical uplink shared channel (physical uplink shared channel, PUSCH) between the terminal device and the network device and a physical sidelink shared channel (physical sidelink shared channel, PSSCH) between the terminal devices may be collectively referred to as a physical transmission shared channel (physical transmission shared channel, PTSCH). In the communication system, the network device may schedule one resource via one piece of downlink control information. For example, the terminal device 1 may send data to the network device and the terminal device 2 by using the resource.

The terminal device may also be referred to as a user equipment (user equipment, UE), a mobile station (mobile station, MS), a mobile terminal (mobile terminal, MT), or the like, and is a device that provides a user with voice and/or data connectivity. For example, the terminal device may include a hand-held device or a vehicle-mounted device that has a wireless connection function. Currently, the terminal device may be: a cellular phone (cellular phone), a smartphone (smartphone), a wireless data card, a personal digital assistant (personal digital assistant, PDA) computer, a mobile phone (mobile phone), a tablet computer, a notebook computer, a palmtop computer, a wireless modem (modem), a laptop computer (laptop computer), a mobile internet device (mobile internet device, MID), a wearable device, a virtual reality (virtual reality, VR) device, an augmented reality (augmented reality, AR) device, an extended reality (extended reality, XR) device, a mixed reality (mixed reality, MR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The terminal device may alternatively be a D2D terminal device, a V2X communication terminal device, an intelligent vehicle, an in-car entertainment system (or referred to as a vehicle-to-everything system) (telematics box, TBOX), a machine-to-machine/machine-type communication (machine-to-machine/machine-type communication, M2M/MTC) terminal device, or an internet of things (internet of things, IoT) terminal device. For example, the terminal device may be a carrier like a vehicle, a ship, or an aircraft, a terminal-type roadside unit, or a communication module or chip built in the vehicle or the roadside unit. For example, the terminal device may be a vehicle-mounted module. If the various terminal devices described above are in a vehicle, for example, placed in the vehicle or mounted in the vehicle, the terminal devices may all be considered as vehicle-mounted terminal devices. For example, the vehicle-mounted terminal device is also referred to as an on-board unit (on-board unit, OBU).

By way of example but not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, the wearable intelligent device includes a full-featured and large-sized device that can implement all or a part of functions without depending on a smartphone, for example, smart watches or smart glasses, and includes a device that is dedicated to only one type of application function and that needs to collaboratively work with another device such as a smartphone, for example, various smart bands, smart helmets, or smart jewelry for monitoring physical signs.

Alternatively, the terminal device may be an intelligent device like an amusement device or a smart appliance, or an uncrewed aerial vehicle.

In this application, the terminal device may alternatively be a functional module, a chip, or a chip system. Optionally, the functional module, the chip, or the chip system may be disposed in the terminal device.

The network device is a device that provides access for the terminal device. The network device may include a radio access network (radio access network, RAN) device, for example, a base station. The network device may be a base station (base station), a long term evolution (long term evolution, LTE) system, or an evolved NodeB (evolved NodeB) in a long term evolution-advanced (long term evolution-advanced, LTE-A) system, which may be referred to as an eNB or an e-NodeB for short, a transmission reception point (transmission reception point, TRP), a next generation base station (next generation NodeB, gNB) in a 5th generation (5th generation, 5G) mobile communication system, a next generation base station in a 6th generation (6th generation, 6G) mobile communication system, a base station in a future mobile communication system, or an access node in a wireless fidelity (wireless fidelity, Wi-Fi) system, and may alternatively be an access network device in an open access network (open RAN, ORAN) system. Optionally, the network device may be a module or unit that can implement some functions of the base station. For example, the network device may be a central unit (central unit, CU), a distributed unit (distributed unit, DU), a CU-control plane (control plane, CP), a CU-user plane (user plane, UP), or a radio unit (radio unit, RU). The CU completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all functions of a physical layer. In different systems, the CU (or the CU-CP and the CU-UP), the DU, or the RU may alternatively have different names, but a person skilled in the art may understand meanings thereof. For example, in the ORAN system, the CU may also be referred to as an O-CU, the DU may also be referred to as an open (open, O)-DU, the CU-CP may also be referred to as an O-CU-CP, the CU-UP may also be referred to as an O-CU-UP, and the RU may also be referred to as an O-RU.

For example, the network device may be a macro base station, may be a micro base station (also referred to as a small cell) or an indoor base station, or may be a relay node or a donor node. The network device may alternatively be a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a remote radio unit (remote radio unit, RRU), a wireless fidelity (wireless fidelity, Wi-Fi) access point (access point, AP), a baseband pool (BBU pool) and an RRU in a cloud radio access network (cloud radio access network, CRAN), or the like. A specific technology and a specific device form that are used by the network device are not limited in embodiments of this application. For example, the network device may correspond to an eNB in a 4G system, and correspond to a gNB in the 5G system.

In this application, the network device may alternatively be a central processing element (central processing element, CPE), a router, or the like.

In this application, the network device may alternatively be a functional module, a chip, or a chip system. Optionally, the functional module, the chip, or the chip system may be disposed in the network device.

It should be understood that the architecture of the communication system shown in FIG. 1 is merely an example for description, and is not intended to limit the communication system in this application. Optionally, the communication system may include more terminal devices or fewer terminal devices, or may further include another type of device, for example, a core network device. This is not limited in this application.

The following first describes some terms in embodiments of this application, to facilitate understanding of a person skilled in the art.

(1) Downlink control information (downlink control information, DCI)

Currently, the DCI includes DCI 0, DCI 1, DCI 2, and DCI 3.

DCI 0 is used for scheduling of a physical uplink control channel (physical uplink control channel, PUSCH), and DCI 0 includes three types: DCI 0_0, DCI 0_1, and DCI 0_2. DCI 0_1 is used for scheduling of one or more PUSCHs in a cell, or indicates configured grant (configured grant, CG) downlink feedback information (CG-downlink feedback information, CG-DFI) to a terminal device. DCI 0_0 and DCI 0_2 are used for scheduling of a PUSCH.

DCI 0_1 may include the following fields:

DCI format (format) indicator: This field indicates whether DCI information is uplink or downlink scheduling information, and occupies 1 bit (bit). 0 indicates uplink, and 1 indicates downlink. This field is always set to 0, indicating uplink DCI.

Frequency domain resource indicator: This field indicates a frequency domain resource of the PUSCH, and a number of occupied bits may be determined by using the following Formula 1:

$$\left\lceil \log_2(N_{RB}^{UL,BWP}(N_{RB}^{UL,BWP} + 1)/2) \right\rceil \qquad \text{Formula 1}$$

$N_{RB}^{UL,BWP}$ is a number of resource blocks (resource block, RB) of a current active bandwidth part (bandwidth part, BWP).

Time domain resource indicator: This field indicates a time domain resource of a physical downlink shared channel (physical downlink shared channel, PDSCH), occupies 4 bits, and indicates a table lookup index of a sidelink resource indication value (sidelink indication value, SLIV) in a time domain resource table.

Frequency hopping flag: This field occupies 1 bit.

Modulation and coding scheme indicator: This field indicates a modulation and coding scheme of the PDSCH, occupies 5 bits, and indicates table lookup indexes of different modulation schemes, target code rates, and spectral efficiency of the PDSCH.

New data indicator: This field occupies 1 bit, and indicates whether a current transmission is a new data transmission or a data retransmission. If a value of this field in the current transmission differs from that in a previous transmission, the current transmission is the new transmission. If the value of this field does not change, the current transmission is the retransmission.

Redundancy version (redundancy version, RV): This field indicates a redundancy version, and occupies 2 bits. Specific meanings indicated by values of this field are shown in the following Table 1:

Table 1

| Value of the redundancy version field (value of the redundancy version field) | Value of an RV to be applied (value of an RV to be applied) |
|---|---|
| 00 | 0 |
| 01 | 1 |
| 10 | 2 |
| 11 | 3 |

Hybrid automatic repeat request (hybrid automatic repeat request, HARQ) process number indicator: This field occupies 4 bits.

Downlink assignment indicator: This field occupies 2 bits, and indicates a number of subframes in a HARQ feedback window that include downlink transmissions for the terminal device.

Transmit power control (transmit power control, TPC) command for scheduled PUCCH: This field indicates a transmit end power control indication for the PUCCH, and specific indicated values are shown in the following Table 2:

Table 2

| TPC command field (TPC command field) | Transmit end power (dB) |
|---|---|
| 0 | -1 |
| 1 | 0 |
| 2 | 1 |
| 3 | 3 |

Channel access type and corresponding cyclic prefix extension (cyclic prefix extension, CPE) length (channel access-cyclic prefix extension, ChannelAccess-CPext): This field indicates a CPE length and a channel access type used in an unlicensed frequency band.

Uplink (uplink, UL) or sidelink uplink (sidelink uplink, SUL) indicator: This field indicates whether the PUSCH is a UL or an SUL. If a number of bits of DCI format 1_0 before padding is greater than a number of bits of DCI format 0_0 before padding, this field is 1 bit. A value of 0 indicates non (non)-SUL, and a value of 1 indicates SUL. If a number of bits of DCI format 1_0 before padding is not greater than a number of bits of DCI format 0_0 before padding, this field is 0 bits.

DCI 3 is used by a network device for scheduling of a physical sidelink control channel (physical sidelink control channel, PSCCH) and a PSSCH for transmission. DCI 3_0 is used for scheduling of a new radio (new radio, NR) PSCCH or PSSCH, and DCI 3_1 is used for scheduling of an LTE PSCCH or PSSCH.

DCI 3_0 may include the following fields:

Resource pool indicator: This field occupies $[\log_2 I]$ bits, where I is a number of transmission resource pools configured by a higher layer parameter (sl-TxPoolScheduling).

Time gap: This field occupies 3 bits determined by a higher layer parameter sl-DCI-ToSL-Trans.

Process number indicator: This field occupies 4 bits.

New data indicator: This field occupies 1 bit, and indicates whether a current transmission is a new data transmission or a data retransmission. If a value of this field in the current transmission differs from that in a previous transmission, the current transmission is the new transmission. If the value of this field does not change, the current transmission is the retransmission.

Lowest index of subchannel allocation to initial transmission: This field occupies $\left\lceil \log_2(N^{SL}_{subChannel}) \right\rceil$ bits. indicates a number of subchannels occupied by a single resource.

Sidelink control information (sidelink control information, SCI) format 1-A fields: These fields include frequency domain resource assignment and time domain resource assignment.

Physical sidelink feedback channel (physical sidelink feedback channel, PSFCH)-to (to)-HARQ feedback timing indicator: This field occupies $\left\lceil \log_2 N_{fb\_timing} \right\rceil$ bits, where $N_{fb\_timing}$ is a number of entries in a higher layer parameter sl-PSFCH-ToPUCCH.

PUCCH resource indicator: This field occupies 3 bits.

Configuration index: If the terminal device is not configured to monitor DCI format 3_0 with cyclic redundancy check (cyclic redundancy check, CRC) scrambled by a sidelink configured scheduling (sidelink configured scheduling, SLCS)-radio network temporary identifier (radio network temporary identifier, RNTI), this field is 0 bits; otherwise, this field is 3 bits. If the terminal device is configured to monitor DCI format 3_0 with CRC scrambled by an SL-CS-RNTI, this field is reserved for DCI format 3_0 with CRC scrambled by an SL-RNTI.

Counter sidelink assignment index: This field occupies 2 bits.

(2) SCI

The SCI is used to send sidelink information, indicates a sidelink resource location and sidelink coding information, and includes two types: first-stage SCI and second-stage SCI. Details are separately described below.

The first-stage SCI may include the following fields:

Priority: This field occupies 3 bits. 000 indicates a priority value of 1, and 001 indicates a priority value of 2.

Frequency domain resource indicator: When a higher layer indicates that a value of sl-MaxNumPerReserve is 2, a number of occupied bits is as shown in Formula 2; otherwise, the number of occupied bits is as shown in Formula 3:

$$\left\lceil \log_2 \left( \frac{N^{SL}_{subChannel}(N^{SL}_{subChannel}+1)}{2} \right) \right\rceil \qquad \text{Formula 2}$$

$$\left\lceil \log_2 \left( \frac{N^{SL}_{subChannel}(N^{SL}_{subChannel}+1)(2N^{SL}_{subChannel}+1)}{6} \right) \right\rceil \qquad \text{Formula 3}$$

Time domain resource indicator: This field occupies 5 bits.

Resource prediction period: This field occupies $\left\lceil \log_2 N_{rsv\_period} \right\rceil$ bits, where $N_{rsv\_period}$ is a number of entries in a higher layer parameter sl-ResourceReservePeriodList.

Demodulation reference signal (demodulation reference signal, DMRS) pattern: This field occupies $\left\lceil \log_2 N_{pattern} \right\rceil$ bits, where $N_{pattern}$ is determined by a higher layer parameter sl-PSSCH-DMRS-TimePatternList.

Second-stage SCI format: This field occupies 2 bits.

beta_offset (beta_offset) indicator: This field occupies 2 bits.

Number of DMRS ports: This field occupies 1 bit.

Modulation and coding scheme indicator: This field occupies 5 bits.

Additional modulation and coding scheme (modulation and coding scheme, MCS) indicator: When one MCS table is configured, this field is 1 bit; or when two MCS tables are configured, this field is 2 bits.

PSFCH overhead indication: This field occupies 1 bit when slPSFCH-Period=2 or 4; otherwise, this field occupies 0 bits.

Conflict information receiving flag: This field occupies 0 bits or 1 bit.

The second-stage SCI may include the following fields:

HARQ process number indicator: This field occupies 4 bits.

New data indicator: This field occupies 1 bit, and indicates whether a current transmission is a new data transmission or a data retransmission. If a value of this field in the current transmission differs from that in a previous transmission, the current transmission is the new transmission. If the value of this field does not change, the current transmission is the retransmission.

Redundancy version: This field occupies 2 bits.

Source identifier (identifier, ID): This field occupies 8 bits.

Destination ID: This field occupies 16 bits.

HARQ enabled indicator: This field occupies 1 bit.

Unicast/multicast/broadcast type indicator: This field occupies 2 bits.

Channel state information (channel state information, CSI) request: This field occupies 1 bit.

(3) RNTI

The RNTI represents a radio network temporary identifier. RNTIs are used to differentiate or identify connected UEs in a cell, specific radio channels, a group of UEs in a case of paging, and system information sent for all UEs by a 5G gNB. The RNTI may be a 16-bit identifier whose value depends on a type of the RNTI.

There may be the following types of RNTI: a system information RNTI (system Information RNTI, SI-RNTI), a paging RNTI (paging RNTI, P-RNTI), a random access RNTI (random access RNTI, RA-RNTI), a temporary cell RNTI (temporary cell RNTI, TC-RNTI), a cell RNTI (cell RNTI, C-RNTI), a modulation and coding scheme cell RNTI (modulation and coding scheme cell RNTI, MCS-C-RNTI), a configured scheduling RNTI (configured scheduling RNTI, CS-RNTI), a transmit power control-PUCCH-RNTI (transmit power control-PUCCH-RNTI, TPC-PUCCH-RNTI), a TPC-PUSCH-RNTI (transmit power control-PUSCH-RNTI), a TPC sounding reference signal RNTI (transmit power control-sounding reference signal-RNTI, TPC-SRS-RNTI), an interruption RNTI (interruption RNTI, INT-RNTI), a slot format indicator RNTI (slot format indicator RNTI, SFI-RNTI), or a semi-persistent CSI RNTI (semi-persistent CSI RNTI, SP-CSI-RNTI).

The following describes specific meanings of several RNTIs.

The C-RNTI is a unique identifier identifying a radio resource control (radio resource control, RRC) connection and scheduling dedicated to a specific UE. The gNB assigns different C-RNTI values to different UEs. The gNB uses the C-RNTI to assign UEs with uplink grants, downlink assignments, and the like. The gNB uses the C-RNTI to differentiate uplink transmissions (for example, a PUSCH and a PUCCH) of UEs from those of other UEs.

The SI-RNTI is used for system information broadcast. The SI-RNTI is a common RNTI, which may be understood as that the SI-RNTI is not explicitly assigned to any UE, and is not assigned to all UEs in a cell. A length of the SI-RNTI is 16 bits, and a value of the SI-RNTI is fixed to 65535 (0xFFFF).

The P-RNTI is used by the UE for reception of paging, and is also a common RNTI. The P-RNTI is not explicitly assigned to any UE. A length of the P-RNTI is 16 bits, and a value of the P-RNTI is fixed to 65534 (0xFFFE).

The RA-RNTI is used during a random access procedure. Media access control (media access control, MAC) of the gNB generates a random access response (random access response, RAR) as a response to a random access preamble sent by the UE. The RAR is transmitted on a DL-SCH transport channel, which maps information to the PDSCH. The gNB scrambles CRC of a PDCCH with the RA-RNTI for transmission of the PDSCH carrying the RAR. The RA-RNTI may be addressed to a plurality of UEs. In other words, the plurality of UEs may decode PDCCHs scrambled by a same UE.

The TC-RNTI is also used during the random access procedure, and the MAC of the gNB generates an RAR as a response to the random access preamble sent by the UE. The MAC RAR includes a temporary C-RNTI. During a contention-based random access procedure, the UE stores the received temporary (temp) C-RNTI (received in the RAR) and uses the temporary C-RNTI during the random access procedure. During a non-contention-based random access procedure, the UE should discard a temporary C-RNTI value received in the RAR. The UE should use the temp C-RNTI for scrambling of a message 3 (message 3, msg3) and retransmit the message 3 (the PUSCH corresponding to an RAR grant). During the contention-based RA procedure, the UE monitors a PDCCH scrambled with the temp C-RNTI. The temp C-RNTI is promoted to the C-RNTI for a UE that detects an RA success and does not already have a C-RNTI.

The TPC-RNTI is used for uplink power control. There are three types of TPC-RNTI: the TPC-PUSCH-RNTI, the TPC-PUCCH-RNTI, and the TPC-SRS-RNTI. Generally, the TPC-RNTI is assigned to a group of UEs. The gNB may configure the UE with the TPC-PUSCH-RNTI, the TPC-PUCCH-RNTI, and the TPC-SRS-RNTI via higher layer signaling (RRC).

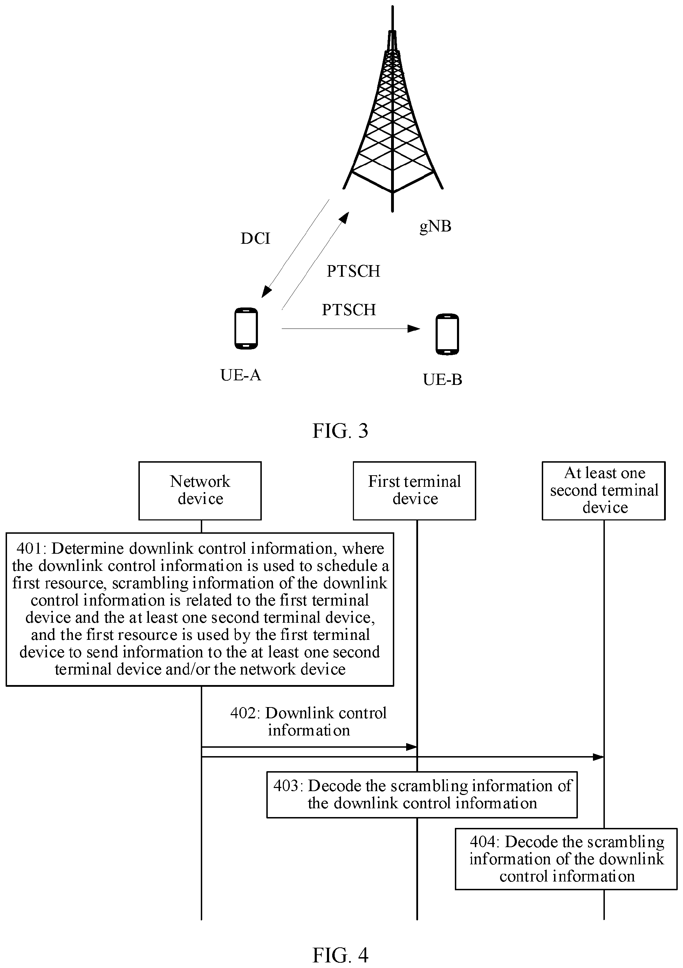

Currently, resources for a Uu-interface uplink/downlink scheduling transmission and a sidelink transmission are scheduled independently. If a single terminal device needs to send uplink data and sidelink data, the terminal device needs to separately request resources from a network device. The terminal device separately receives resources indicated by different DCI, and then sends information to the network device and to a sidelink receiving terminal device by using corresponding resources. As shown in FIG. 2, in a case of both an uplink transmission and a sidelink transmission, a UE-A separately requests a corresponding uplink transmission resource and a corresponding sidelink transmission resource from a gNB, and the gNB separately schedules resources for the uplink transmission and the sidelink transmission via corresponding DCI 0 and DCI 3. In the foregoing transmission method, resource overheads are high, and a delay is long. Based on this, a communication method provided in embodiments of this application may be applied to an architecture integrating a sidelink transmission and an uplink transmission. As shown in FIG. 3, the uplink transmission and the sidelink transmission are not distinguished, and a PUSCH and a PSSCH are collectively referred to as a PTSCH. In this case, in a case of both the uplink transmission and the sidelink transmission, or in a case of only the uplink transmission or the sidelink transmission, a UE-A needs to send only one uplink resource request, and a gNB needs to indicate only one piece of DCI to schedule one corresponding resource. The gNB receives, on the corresponding resource, data sent by the UE-A, and a UE-B also receives, on the corresponding resource, the data sent by the UE-A, so that resource overheads and a scheduling delay are reduced.

To enable all terminal devices participating in PTSCH transmissions to decode, in an architecture integrating the sidelink transmission and the uplink transmission, same DCI sent by a network device, the communication method in embodiments of this application is provided. The following describes in detail the communication method provided in embodiments of this application.

In embodiments of this application, an operation performed by the terminal device or the network device may alternatively be performed by a processor, a chip, a chip system, a functional module, or the like in the terminal device or the network device. This is not limited in this application. For example, the following operation performed by a first terminal device may alternatively be performed by a processor, a chip, a functional module, or the like in the first terminal device. Devices such as a second terminal device and the network device are similar to that described above, and details are not described one by one.

Based on the foregoing descriptions, an embodiment of this application provides a communication method. As shown in FIG. 4, a procedure of the method may include the following steps:

Step 401: A network device determines downlink control information, where the downlink control information is used to schedule a first resource, scrambling information of the downlink control information is related to a first terminal device and at least one second terminal device, and the first resource is used by the first terminal device to send information to the at least one second terminal device and/or the network device.

The downlink control information may be newly constructed DCI, for example, may be denoted as DCI X. X is not limited in this application.

In an optional implementation, the downlink control information may be understood as having both a function of current downlink resource scheduling and a function of sidelink transmission decoding information indication. The downlink control information may include some or all fields of the foregoing DCI 0, DCI 3, and SCI, that is, a combined field including some or all fields of the foregoing DCI 0, DCI 3, and SCI. For example, the downlink control information may include one or more of the following fields: DCI format (format) indicator, frequency domain resource indicator, time domain resource indicator, frequency hopping flag, modulation and coding scheme indicator, new data indicator, redundancy version, HARQ process number indicator, downlink assignment indicator, TPC command for scheduled PUCCH, ChannelAccess-CPext, UL or SUL indicator, resource pool indicator, time gap, PSFCH-to-HARQ feedback timing indicator, configuration index, priority, number of DMRS ports, additional MCS indicator, or PSFCH overhead indication. For meanings of the foregoing fields, refer to related descriptions in the foregoing term explanation part. Details are not described herein again.

Optionally, the downlink control information is not limited to including the foregoing fields. For example, the downlink control information may further include an identifier field, and the identifier field may indicate an identifier like an additional RNTI or an identifier of a sidelink terminal device.

Generally, a process of generating the downlink control information may include: first adding a CRC check bit, and then performing RNTI scrambling, so that a terminal device that receives the downlink control information determines whether the downlink control information is downlink control information sent to the terminal device.

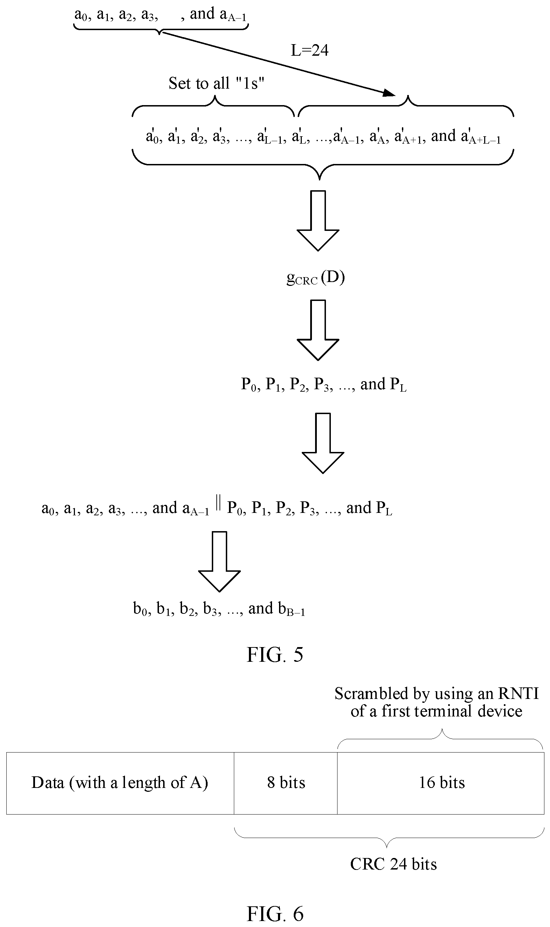

For example, as shown in FIG. 5, a process of generating CRC may include: adding 24 bits of '1' in front of a DCI bit stream: $a_0$, $a_1$, $a_2$, $a_3$, ..., and $a_{A-1}$, to form a bit stream of 24+A; and then generating check bits $p_0$, $p_1$, $p_2$, $p_3$, ..., and $p_{L-1}$ by using a generator polynomial $g_{CRC}(D)$.

Further, as shown in FIG. 5, after the CRC check bits are generated, the check bits may be concatenated after the DCI bit stream to form a new data stream $b_0$, $b_1$, $b_2$, $b_3$, ..., and $b_{B-1}$, where B = A + L.

Currently, in a scenario in which resources are separately scheduled for an uplink and a sidelink, after generating the new data stream $b_1$, $b_2$, ..., and $b_{B-1}$, the network device may scramble the last 16 bits of the 24 bits in the CRC part by using an RNTI of the first terminal device, as shown in FIG. 6. However, in this method, only the first terminal device can decode the downlink control information, and the at least one second terminal device cannot decode the downlink control information.

Therefore, in this embodiment of this application, to enable both the first terminal device and the at least one second terminal device to decode the downlink control information, in a possible manner a1, the scrambling information may include a first information field and a second information field, the first information field is scrambled by using a first identifier, the second information field is scrambled by using a second identifier, the first identifier identifies the first terminal device, and the second identifier identifies the at least one second terminal device.

The network device may scramble partial data of the bit stream to which the CRC check bits are added. When a length of the scrambled bit stream is less than a length of the CRC check bits, the first information field includes information indicating that partial data of the CRC is scrambled, and the second information field includes information indicating that partial data of the CRC is scrambled.

It should be understood that when the length of the scrambled bit stream is equal to the length of the CRC check bits, both the first information field and the second information field may include information indicating that all data of the CRC is scrambled. When the length of the scrambled bit stream is greater than the length of the CRC check bits, both the first information field and the second information field may include information indicating that all data of the CRC is scrambled and information indicating that a part of other data of the CRC is scrambled.

In other words, same data is scrambled for the first information field and the second information field. Because scrambling identifiers are different, scrambling information in the first information field and scrambling information in the second information field are different. Certainly, the length of the scrambled bit stream may be configured, predefined, or preconfigured.

An example in which the length of the scrambled bit stream is less than the length of the CRC check bits is used for description. For CRC check data with a length of L, the network device may construct two parts of L = X + Y1, and copy Y1 to obtain Y2, to construct a sequence with a length of L1 = X + Y1 + Y2. Then, the network device scrambles Y1 and Y2 separately by using different RNTIs or other identifiers. Lengths of X, Y1, and L may be predefined, preconfigured, or configured.

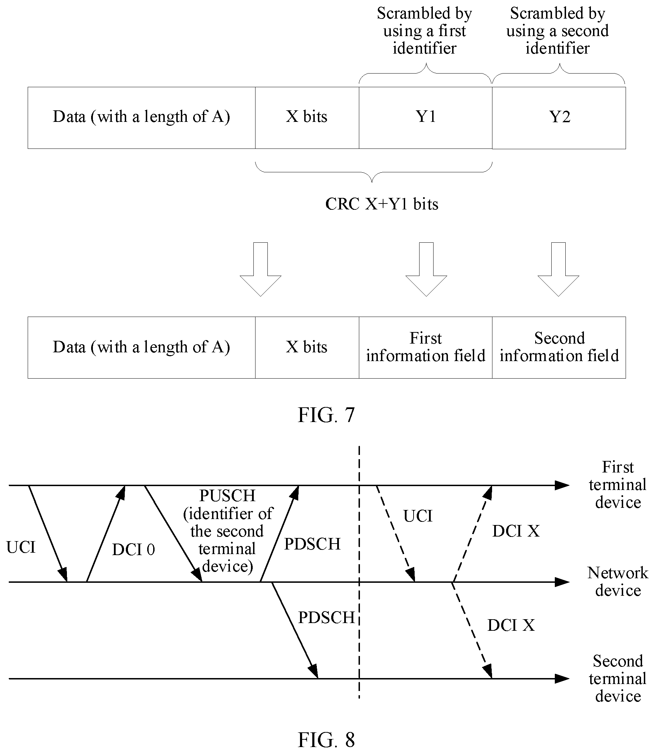

In an example, a bit position occupied by the first information field may be before a bit position occupied by the second information field. To be specific, content of the first information field may be obtained by scrambling Y1 using the first identifier, and content of the second information field may be obtained by scrambling Y2 using the second identifier, as shown in FIG. 7.

In another example, a bit position occupied by the first information field may be after a bit position occupied by the second information field. To be specific, content of the second information field may be obtained by scrambling Y1 using the second identifier, and content of the first information field may be obtained by scrambling Y2 using the first identifier.

It should be understood that an order of the bit position occupied by the first information field and the bit position occupied by the second information field may be configured, in other words, which partial data is scrambled by using which identifier can be configured. Lengths of the bit position occupied by the first information field and the bit position occupied by the second information field are predefined, configured, or preconfigured.

The bit position occupied by the first information field may indicate the first terminal device to send information on the first resource. It may also be understood as that the first terminal device may determine, based on the bit position occupied by the first information field, that the first information field is scrambled by using the first identifier, so that the first terminal device can decode the first information field based on the first identifier.

The bit position occupied by the second information field may indicate the at least one second terminal device to receive information sent by the first terminal device, in other words, the bit position occupied by the second information field may indicate the first terminal device to send information to the at least one second terminal device. It may also be understood as that the at least one second terminal device may determine, based on the bit position occupied by the second information field, that the second information field is scrambled by using the second identifier, so that the at least one second terminal device can decode the second information field based on the second identifier.

Optionally, the network device may scramble Y1 and Y2 separately by using different identifiers by using the following Formula 4:

$$c_k = \left(b_k + x_{mti,k-A-8}\right) \bmod 2, \text{ for } k = A + 8, A + 9, A + 10, \dots, A + 23 \qquad \text{Formula 4}$$

$c_k$ is scrambled data, $x_{mti,k-A-8}$ is bit string information corresponding to a terminal device identifier, $b_k$ is partial data of a bit data string before scrambling, and A is a length of a data stream for transmission of the downlink control information.

For example, either of the first identifier and the second identifier may include one of the following: a C-RNTI, a TC-RNTI, a unicast identifier, a multicast identifier, or a broadcast identifier.

In some embodiments, when the at least one second terminal device includes two or more second terminal devices, the two or more second terminal devices may correspond to a same second identifier. For example, the two or more second terminal devices may be identified by using a unified identifier like the multicast identifier or the broadcast identifier. In this case, the network device may perform scrambling according to the foregoing method.

When the at least one second terminal device includes two or more second terminal devices, the two or more second terminal devices may correspond to different identifiers. For example, the two terminal devices respectively correspond to an identifier 1 and an identifier 2. In this case, the network device may copy Y1 twice to obtain Y2 and Y3, to construct a sequence with a length of L2 = X + Y1 + Y2 + Y3. Then, the network device scrambles Y1, Y2, and Y3 by using different identifiers. For example, Y1 may be scrambled by using the first identifier of the first terminal device, Y2 may be scrambled by using the identifier 1, and Y3 may be scrambled by using the identifier 2.

It should be understood that the foregoing is merely an example, and a similar scrambling method is used when the more than two second terminal devices respectively correspond to different identifiers. Details are not described herein again.

Certainly, when there are more than two second terminal devices, a part of the second terminal devices may correspond to a same identifier. For example, if there are five second terminal devices, a second terminal device 1 to a second terminal device 3 may correspond to a multicast identifier 1, and a second terminal device 4 and a second terminal device 5 may correspond to a multicast identifier 2. For a scrambling method, still refer to the foregoing method. Details are not described herein again. In addition, there may be a plurality of other cases, and principles are the same. Details are not described one by one in this application.

In the manner a1, before the network device determines the downlink control information, the first terminal device may send the second identifier to the network device, and correspondingly, the network device may receive the second identifier from the first terminal device. In this way, the network device can implement the foregoing scrambling based on the first identifier of the first terminal device and the second identifier of the at least one second terminal device, to obtain the downlink control information.

Optionally, the first terminal device may send the second identifier to the network device via uplink control information (uplink control information, UCI). It should be understood that the first terminal device may alternatively send the second identifier to the network device via another message. This is not limited in this application.

In a possible manner a2, the scrambling information is scrambled by using a third identifier, and the third identifier identifies the first terminal device and the at least one second terminal device.

For example, the third identifier may be a pair (pair) ID. The network device may maintain a pair ID for a unicast link, a multicast link, or a broadcast link that involves the sidelink transmission, for example, pair ID=map (Tx-RNTI, Rx-RNTI). Tx-RNTI is an ID of a destination terminal device (that is, the first terminal device) for which a resource is scheduled via the downlink control information, and Rx-RNTI is an ID of a receiving terminal device (that is, the at least one second terminal device) that receives sidelink information.

An identifier of the at least one second terminal device includes one of the following: a C-RNTI, a TC-RNTI, a unicast identifier, a multicast identifier, a broadcast identifier, or the like.

In the manner a2, in an optional implementation, the first terminal device sends the identifier of the at least one second terminal device to the network device, and the network device generates the third identifier based on an identifier of the first terminal device and the identifier of the at least one second terminal device, and sends the third identifier to the first terminal device and the at least one second terminal device.

Optionally, the foregoing process may be performed after the first terminal device separately establishes a communication link to the at least one second terminal device and the network device, and after the first terminal device establishes a communication link to the at least one second terminal device.

In an example, as shown in FIG. 8, one second terminal device is used as an example for description. The first terminal device may send the UCI to the network device, to request the network device to schedule a resource for the first terminal device. The network device indicates the resource to the first terminal device via DCI 0. The first terminal device includes the identifier of the second terminal device in a corresponding PUSCH based on the scheduled resource. Then, the network device generates the third identifier based on local information by using the identifier of the first terminal device and the identifier of the second terminal device, and sends the third identifier to the first terminal device and the second terminal device through a PDSCH. Then, as shown in FIG. 8, the first terminal device requests resource scheduling from the network device via the UCI, and the network device sends DCI X to the first terminal device and the second terminal device.

It should be understood that FIG. 8 is merely an example. Optionally, the first terminal device may alternatively include the identifier of the second terminal device in the UCI that requests to schedule a resource. This is not shown in the figure herein.

Optionally, the network device may send the third identifier to the first terminal device and the second terminal device via DCI X. In this case, DCI X includes a field indicating the third identifier.

In some embodiments, the first terminal device may send indication information to the network device, where the indication information indicates the network device to generate the third identifier based on the identifier of the first terminal device and the identifier of the at least one second terminal device.

The indication information and the identifier of the at least one second terminal device may be included in a same message, or may be included in different messages. This is not limited in this application.

In some other embodiments, that the first terminal device sends the identifier of the at least one second terminal device to the network device may implicitly indicate the network device to generate the third identifier based on the identifier of the first terminal device and the identifier of the at least one second terminal device.

In an optional implementation, the first terminal device and the at least one second terminal device may further send, to the network device, information indicating that the third identifier is received. For example, the first terminal device and the at least one second terminal device may include, in the UCI, the information indicating that the third identifier is received.

Step 402: The network device sends the downlink control information to the first terminal device and the at least one second terminal device. Correspondingly, the first terminal device and the at least one second terminal device receive the downlink control information from the network device.

Optionally, after the first terminal device requests PTSCH resource scheduling from the network device, the network device sends the downlink control information, that is, sends DCI X, to the first terminal device and the at least one second terminal device.

Step 403: The first terminal device decodes the scrambling information of the downlink control information.

Refer to the foregoing descriptions. In the manner a1, when the first terminal device decodes the scrambling information of the downlink control information, the first terminal device may decode the first information field in the scrambling information by using the first identifier.

Further, after obtaining decoding information of the first information field, the first terminal device may decode the downlink control information, to obtain a location of the first resource, so as to send the information to the network device and the at least one second terminal device on the first resource.

In the manner a2, when the first terminal device decodes the scrambling information of the downlink control information, the first terminal device may decode the scrambling information by using the third identifier.

Further, after obtaining decoding information of the scrambling information through decoding, the first terminal device may decode the downlink control information, to obtain a location of the first resource, so as to send the information to the network device and the at least one second terminal device on the first resource.

Step 404: The at least one second terminal device decodes the scrambling information of the downlink control information.

It should be understood that an order of step 403 and step 404 is not limited in this application, and is merely an example for description herein.

Refer to the foregoing descriptions. In the manner a1, when the at least one second terminal device decodes the scrambling information of the downlink control information, the at least one second terminal device may decode the first information field in the scrambling information by using the second identifier.

In the manner a2, when the at least one second terminal device decodes the scrambling information of the downlink control information, the at least one second terminal device may decode the scrambling information by using the third identifier.

After successfully performing decoding, the at least one second terminal device may receive the information sent by the first terminal device.

In the foregoing method, because the scrambling information of the downlink control information is related to the first terminal device and the at least one second terminal device, the first terminal device and the at least one second terminal device can successfully decode the downlink control information. In this way, the first terminal device needs to send only one uplink resource request, and the network device needs to indicate only one piece of downlink control information to schedule one corresponding resource, so that the network device receives, on the corresponding resource, data sent by the first terminal device, and simultaneously, the at least one second terminal device also receives, on the corresponding resource, the data sent by the first terminal device, thereby reducing resource overheads and reducing a scheduling delay.

In the foregoing embodiment, an example in which there is at least one second terminal device is used for description. It should be understood that in one data transmission, there may be no second terminal device, in other words, the first terminal device sends information to the network device only. In this case, the scrambling information of the downlink control information is still related to the first terminal device and the at least one second terminal device. In this case, related information of the at least one second terminal device may be a default (default) value. For example, the network device may perform scrambling by using the default value and the identifier of the first terminal device to obtain the downlink control information, or the network device performs scrambling by using a new identifier obtained by combining the default value and the identifier of the first terminal device to obtain the downlink control information. This is not limited in this application.

In the foregoing embodiment, a scenario in which the network device schedules a resource for the first terminal device is used for description. In some embodiments, alternatively, a third terminal device may send one piece of information to the first terminal device, to schedule one resource, so that the first terminal device may send information to the third terminal device and the at least one second terminal device by using the resource. The information sent by the third terminal device may also include scrambling information, and the scrambling information is related to the first terminal device and the at least one second terminal device. Specifically, a scrambling manner corresponding to the scrambling information may be similar to a scrambling manner of the foregoing network device, and mutual reference may be made to each other. Details are not described herein again.

In addition to the foregoing method, to enable all terminal devices participating in PTSCH transmissions to decode, in an architecture integrating the sidelink transmission and the uplink transmission, same DCI sent by the network device, another new DCI may be further designed in this embodiment of this application. The new DCI is two-stage DCI, where first-stage DCI may be broadcast DCI, and second-stage DCI may be unicast DCI. For example, the first-stage DCI may include information required by all terminal devices. For example, the first-stage DCI may include the following fields: MCS, new data indicator, and HARQ process number indicator. In this way, the first-stage DCI is not scrambled, and all the terminal devices can obtain the first-stage DCI. The second-stage DCI may include specified (specified) information required by a terminal device (for example, the first terminal device) that requests resource scheduling. The second-stage DCI is scrambled by using the identifier of the first terminal device. For example, the second-stage DCI may include the following fields: TPC command for scheduled PUSCH, UL or SUL indicator, and time domain resource indicator. For meanings of the foregoing fields, refer to the foregoing related descriptions. Details are not described herein again.

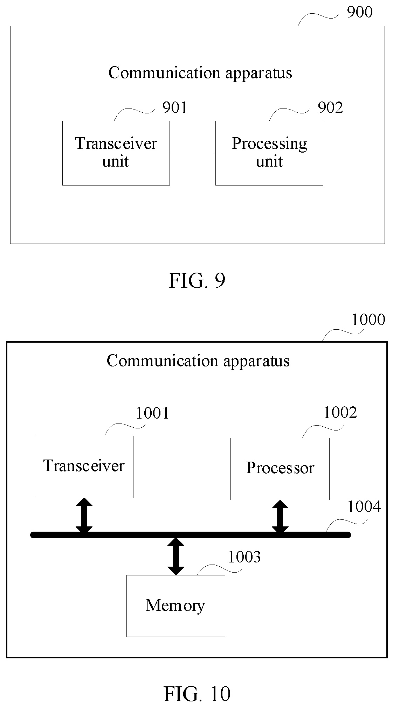

Based on the foregoing embodiments, an embodiment of this application further provides a communication apparatus. Refer to FIG. 9. The communication apparatus 900 may include a transceiver unit 901 and a processing unit 902. The transceiver unit 901 is used by the communication apparatus 900 for communication, for example, receiving information (a message or data) or sending information (a message or data), and the processing unit 902 is configured to control and manage an action of the communication apparatus 900. The processing unit 902 may further control a step performed by the transceiver unit 901.

For example, the communication apparatus 900 may be specifically the first terminal device in the foregoing embodiments, or a processor, a chip, a chip system, a functional module, or the like in the first terminal device. Alternatively, the communication apparatus 900 may be specifically the network device in the foregoing embodiments, or a processor, a chip, a chip system, a functional module, or the like in the network device.

In an embodiment, when the communication apparatus 900 is configured to implement a function of the first terminal device in the embodiment in FIG. 4, the transceiver unit 901 may be configured to receive downlink control information from a network device, where the downlink control information is used to schedule a first resource, scrambling information of the downlink control information is related to the first terminal device and at least one second terminal device, and the first resource is used by the first terminal device to send information to the at least one second terminal device and/or the network device; and the processing unit 902 may be configured to decode the scrambling information of the downlink control information.

In an optional implementation, the scrambling information includes a first information field and a second information field, the first information field is scrambled by using a first identifier, the second information field is scrambled by using a second identifier, the first identifier identifies the first terminal device, and the second identifier identifies the at least one second terminal device.

For example, a bit position occupied by the first information field is before a bit position occupied by the second information field.

Optionally, the bit position occupied by the first information field indicates the first terminal device to send information on the first resource, and the bit position occupied by the second information field indicates the at least one second terminal device to receive information sent by the first terminal device.

In some embodiments, when decoding the scrambling information of the downlink control information, the processing unit 902 may be configured to decode the first information field based on the first identifier.

The first information field includes information indicating that partial data of a cyclic redundancy check code is scrambled, and the second information field includes information indicating that partial data of the cyclic redundancy check code is scrambled.

Lengths of the bit position occupied by the first information field and the bit position occupied by the second information field are predefined, configured, or preconfigured.

In a possible manner, the transceiver unit 901 may be further configured to send the second identifier to the network device.

For example, either of the first identifier and the second identifier includes one of the following: a cell radio network temporary identifier C-RNTI, a temporary cell radio network temporary identifier TC-RNTI, a unicast identifier, a multicast identifier, or a broadcast identifier.

In another optional implementation, the scrambling information is scrambled by using a third identifier, and the third identifier identifies the first terminal device and the at least one second terminal device.

In some embodiments, when decoding the scrambling information of the downlink control information, the processing unit 902 may be configured to decode the scrambling information of the downlink control information based on the third identifier.

In a possible manner, the transceiver unit 901 may be further configured to: send an identifier of the at least one second terminal device to the network device; and receive the third identifier from the network device.

Optionally, the transceiver unit 901 may be further configured to send indication information to the network device, where the indication information indicates the network device to generate the third identifier based on an identifier of the first terminal device and the identifier of the at least one second terminal device.

In some implementations, the transceiver unit 901 may be further configured to send, to the network device, information indicating that the third identifier is received.

For example, the identifier of the at least one second terminal device includes one of the following: a cell radio network temporary identifier C-RNTI, a temporary cell radio network temporary identifier TC-RNTI, a unicast identifier, a multicast identifier, or a broadcast identifier.

In another embodiment, when the communication apparatus 900 is configured to implement a function of the network device in the embodiment in FIG. 4, the processing unit 902 may be configured to determine downlink control information, where the downlink control information is used to schedule a first resource, scrambling information of the downlink control information is related to a first terminal device and at least one second terminal device, and the first resource is used by the first terminal device to send information to the at least one second terminal device and/or the network device; and the transceiver unit 901 may be configured to send the downlink control information to the first terminal device and the at least one second terminal device.

In an optional implementation, the scrambling information includes a first information field and a second information field, the first information field is scrambled by using a first identifier, the second information field is scrambled by using a second identifier, the first identifier identifies the first terminal device, and the second identifier identifies the at least one second terminal device.

For example, a bit position occupied by the first information field is before a bit position occupied by the second information field.

In an example, the bit position occupied by the first information field indicates the first terminal device to send information on the first resource, and the bit position occupied by the second information field indicates the at least one second terminal device to receive information sent by the first terminal device.

Optionally, the first information field includes information indicating that partial data of a cyclic redundancy check code is scrambled, and the second information field includes information indicating that partial data of the cyclic redundancy check code is scrambled.

Lengths of the bit position occupied by the first information field and the bit position occupied by the second information field are predefined, configured, or preconfigured.

In a possible manner, the transceiver unit 901 may be further configured to receive the second identifier from the first terminal device.

For example, either of the first identifier and the second identifier includes one of the following: a cell radio network temporary identifier C-RNTI, a temporary cell radio network temporary identifier TC-RNTI, a unicast identifier, a multicast identifier, or a broadcast identifier.

In another optional implementation, the scrambling information is scrambled by using a third identifier, and the third identifier identifies the first terminal device and the at least one second terminal device.

Optionally, the transceiver unit 901 may be further configured to receive an identifier of the at least one second terminal device from the first terminal device; the processing unit 902 may be further configured to generate the third identifier based on an identifier of the first terminal device and the identifier of the at least one second terminal device; and the transceiver unit 901 may be further configured to send the third identifier to the first terminal device and the at least one second terminal device.

In an example, the transceiver unit 901 may be further configured to receive indication information from the first terminal device, where the indication information indicates the network device to generate the third identifier based on the identifier of the first terminal device and the identifier of the at least one second terminal device.

Optionally, the transceiver unit 901 may be further configured to receive, from the first terminal device and the at least one second terminal device, information indicating that the third identifier is received.

For example, the identifier of the at least one second terminal device is one of the following: a cell radio network temporary identifier C-RNTI, a temporary cell radio network temporary identifier TC-RNTI, a unicast identifier, a multicast identifier, or a broadcast identifier.

It should be noted that, in this embodiment of this application, division into the units is an example, and is merely a logical function division. In an actual implementation, another division manner may be used. Functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or a part of the technical solutions may be implemented in the form of a software product. A computer software product is stored in a storage medium and includes several instructions for instructing a computer device (which may be a personal computer, a server, or a network device) or a processor to perform all or a part of the steps of the methods in embodiments of this application. The foregoing storage medium includes any medium that can store program code, for example, a USB flash drive, a portable hard drive, a read-only memory (read-only memory, ROM), a random access memory (random access memory, RAM), a magnetic disk, or an optical disc.

Based on the foregoing embodiments, an embodiment of this application further provides a communication apparatus. Refer to FIG. 10. The communication apparatus 1000 may include a processor 1002. Optionally, the communication apparatus 1000 may further include a transceiver 1001. Optionally, the communication apparatus 1000 may further include a memory 1003. The memory 1003 may be disposed inside the communication apparatus 1000, or may be disposed outside the communication apparatus 1000. The processor 1002 may control the transceiver 1001 to receive/send information, a message, data, or the like.

Specifically, the processor 1002 may be a central processing unit (central processing unit, CPU), a network processor (network processor, NP), or a combination of the CPU and the NP. The processor 1002 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof.

The transceiver 1001, the processor 1002, and the memory 1003 are interconnected. Optionally, the transceiver 1001, the processor 1002, and the memory 1003 are interconnected through a bus 1004. The bus 1004 may be a peripheral component interconnect (Peripheral Component Interconnect, PCI) bus, an extended industry standard architecture (Extended Industry Standard Architecture, EISA) bus, or the like. The bus may include an address bus, a data bus, a control bus, and the like. For ease of representation, only one bold line is used in FIG. 10 for representation, but this does not mean that there is only one bus or only one type of bus.

In an optional implementation, the memory 1003 is configured to store a program and the like. Specifically, the program may include program code, and the program code includes computer operation instructions. The memory 1003 may include a RAM, and may further include a non-volatile memory (non-volatile memory), for example, one or more disk memories. The processor 1002 executes the application program stored in the memory 1003, to implement the foregoing function, so as to implement a function of the communication apparatus 1000.

For example, the communication apparatus 1000 may be the network device in the foregoing embodiments, or may be the first terminal device in the foregoing embodiments.

In an embodiment, when the communication apparatus 1000 implements a function of the first terminal device in the embodiment shown in FIG. 4, the transceiver 1001 may implement a receiving/sending operation performed by the first terminal device in the embodiment shown in FIG. 4; and the processor 1002 may implement an operation other than the receiving/sending operation performed by the first terminal device in the embodiment shown in FIG. 4. Specifically, for related detailed descriptions, refer to the related descriptions in the embodiment shown in FIG. 4. Details are not described herein again.

In another embodiment, when the communication apparatus 1000 implements a function of the network device in the embodiment shown in FIG. 4, the transceiver 1001 may implement a receiving/sending operation performed by the network device in the embodiment shown in FIG. 4, and the processor 1002 may implement an operation other than the receiving/sending operation performed by the network device in the embodiment shown in FIG. 4. Specifically, for related detailed descriptions, refer to the related descriptions in the embodiment shown in FIG. 4. Details are not described herein again.

Based on the foregoing embodiments, an embodiment of this application provides a communication system. The communication system may include the network device, the first terminal device, the second terminal device, and the like in the foregoing embodiments.

An embodiment of this application further provides a computer-readable storage medium. The computer-readable storage medium is configured to store a computer program. When the computer program is executed by a computer, the computer may implement the communication method provided in the foregoing method embodiments.

An embodiment of this application further provides a computer program product. The computer program product is configured to store a computer program. When the computer program is executed by a computer, the computer may implement the communication method provided in the foregoing method embodiments.

An embodiment of this application further provides a chip, including a processor. The processor is coupled to a memory, and is configured to invoke a program in the memory, to cause the chip to implement the communication method provided in the foregoing method embodiments.

An embodiment of this application further provides a chip. The chip is coupled to a memory, and the chip is configured to implement the communication method provided in the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that an apparatus configured to implement a specific function in one or more processes in the flowcharts and/or in one or more blocks in the block diagrams is generated by using instructions executed by a computer or the processor of any other programmable data processing device.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that these modifications and variations fall within the scope of the claims of this application and equivalent technologies of the claims.

**Claims**

1. A communication method, comprising:

   receiving downlink control information from a network device, wherein the downlink control information is used to schedule a first resource, scrambling information of the downlink control information is related to a first terminal device and at least one second terminal device, and the first resource is used by the first terminal device to send information to the at least one second terminal device and/or the network device; and
   decoding the scrambling information of the downlink control information.

2. The method according to claim 1, wherein the scrambling information comprises a first information field and a second information field, the first information field is scrambled by using a first identifier, the second information field is scrambled by using a second identifier, the first identifier identifies the first terminal device, and the second identifier identifies the at least one second terminal device.

3. The method according to claim 2, wherein a bit position occupied by the first information field is before a bit position occupied by the second information field.

4. The method according to claim 2 or 3, wherein the bit position occupied by the first information field indicates the first terminal device to send information on the first resource, and the bit position occupied by the second information field indicates the at least one second terminal device to receive information sent by the first terminal device.

5. The method according to any one of claims 2 to 4, wherein decoding the scrambling information of the downlink control information comprises:
   decoding the first information field based on the first identifier.

6. The method according to any one of claims 2 to 5, wherein the first information field comprises information indicating that partial data of a cyclic redundancy check code is scrambled, and the second information field comprises information indicating that partial data of the cyclic redundancy check code is scrambled.

7. The method according to any one of claims 2 to 6, wherein lengths of the bit position occupied by the first information field and the bit position occupied by the second information field are predefined, configured, or preconfigured.

8. The method according to any one of claims 2 to 7, wherein the method further comprises: sending the second identifier to the network device.

9. The method according to any one of claims 2 to 8, wherein either of the first identifier and the second identifier comprises one of the following: a cell radio network temporary identifier C-RNTI, a temporary cell radio network temporary identifier TC-RNTI, a unicast identifier, a multicast identifier, or a broadcast identifier.

10. The method according to claim 1, wherein the scrambling information is scrambled by using a third identifier, and the third identifier identifies the first terminal device and the at least one second terminal device.

11. The method according to claim 10, wherein decoding the scrambling information of the downlink control information comprises:
decoding the scrambling information of the downlink control information based on the third identifier.

12. The method according to claim 10 or 11, wherein the method further comprises:

sending an identifier of the at least one second terminal device to the network device; and
receiving the third identifier from the network device.

13. The method according to claim 12, wherein the method further comprises:
sending indication information to the network device, wherein the indication information indicates the network device to generate the third identifier based on an identifier of the first terminal device and the identifier of the at least one second terminal device.

14. The method according to claim 12 or 13, wherein the method further comprises:
sending, to the network device, information indicating that the third identifier is received.

15. The method according to any one of claims 12 to 14, wherein the identifier of the at least one second terminal device comprises one of the following: a cell radio network temporary identifier C-RNTI, a temporary cell radio network temporary identifier TC-RNTI, a unicast identifier, a multicast identifier, or a broadcast identifier.

16. A communication method, comprising:

determining downlink control information, wherein the downlink control information is used to schedule a first resource, scrambling information of the downlink control information is related to a first terminal device and at least one second terminal device, and the first resource is used by the first terminal device to send information to the at least one second terminal device and/or a network device; and
sending the downlink control information to the first terminal device and the at least one second terminal device.

17. The method according to claim 16, wherein the scrambling information comprises a first information field and a second information field, the first information field is scrambled by using a first identifier, the second information field is scrambled by using a second identifier, the first identifier identifies the first terminal device, and the second identifier identifies the at least one second terminal device.

18. The method according to claim 17, wherein a bit position occupied by the first information field is before a bit position occupied by the second information field.

19. The method according to claim 17 or 18, wherein the bit position occupied by the first information field indicates the first terminal device to send information on the first resource, and the bit position occupied by the second information field indicates the at least one second terminal device to receive information sent by the first terminal device.

20. The method according to any one of claims 17 to 19, wherein the first information field comprises information indicating that partial data of a cyclic redundancy check code is scrambled, and the second information field comprises information indicating that partial data of the cyclic redundancy check code is scrambled.

21. The method according to any one of claims 17 to 20, wherein lengths of the bit position occupied by the first information field and the bit position occupied by the second information field are predefined, configured, or preconfigured.

22. The method according to any one of claims 17 to 21, wherein the method further comprises:
receiving the second identifier from the first terminal device.

23. The method according to any one of claims 17 to 22, wherein either of the first identifier and the second identifier comprises one of the following: a cell radio network temporary identifier C-RNTI, a temporary cell radio network temporary identifier TC-RNTI, a unicast identifier, a multicast identifier, or a broadcast identifier.

24. The method according to claim 16, wherein the scrambling information is scrambled by using a third identifier, and the third identifier identifies the first terminal device and the at least one second terminal device.

25. The method according to claim 24, wherein the method further comprises:

receiving an identifier of the at least one second terminal device from the first terminal device;
generating the third identifier based on an identifier of the first terminal device and the identifier of the at least one second terminal device; and
sending the third identifier to the first terminal device and the at least one second terminal device.

26. The method according to claim 25, wherein the method further comprises:
receiving indication information from the first terminal device, wherein the indication information indicates the network device to generate the third identifier based on the identifier of the first terminal device and the identifier of the at least one second terminal device.

27. The method according to claim 25 or 26, wherein the method further comprises:
receiving, from the first terminal device and the at least one second terminal device, information indicating that the third identifier is received.

28. The method according to any one of claims 25 to 27, wherein the identifier of the at least one second terminal device is one of the following: a cell radio network temporary identifier C-RNTI, a temporary cell radio network temporary identifier TC-RNTI, a unicast identifier, a multicast identifier, or a broadcast identifier.

29. A communication apparatus, comprising a module or unit configured to perform the method according to any one of claims 1 to 15.

30. A communication apparatus, comprising a module or unit configured to perform the method according to any one of claims 16 to 28.

31. A communication apparatus, comprising a processor, wherein the processor is coupled to a memory; and
the processor is configured to invoke computer instructions in the memory, to cause the communication apparatus to perform the method according to any one of claims 1 to 15.

32. A communication apparatus, comprising a processor, wherein the processor is coupled to a memory; and
the processor is configured to invoke computer instructions in the memory, to cause the communication apparatus to perform the method according to any one of claims 16 to 28.

33. A computer-readable storage medium, wherein the computer-readable storage medium stores computer-executable instructions, and when the computer-executable instructions are invoked by a computer, the method according to any one of claims 1 to 15 or the method according to any one of claims 16 to 28 is performed.

34. A computer program product, comprising instructions, wherein when the instructions are run on a computer, the method according to any one of claims 1 to 15 or the method according to any one of claims 16 to 28 is performed.

35. A chip, wherein the chip is coupled to a memory, and is configured to read and execute program instructions stored in the memory, to implement the method according to any one of claims 1 to 15 or the method according to any one of claims 16 to 28.

FIG. 1

FIG. 2

FIG. 3

FIG. 4

$a_0, a_1, a_2, a_3, \quad , \text{and } a_{A-1}$

L=24

Set to all "1s"

$a'_0, a'_1, a'_2, a'_3, ..., a'_{L-1}, a'_L, ...,a'_{A-1}, a'_A, a'_{A+1}, \text{and } a'_{A+L-1}$

$g_{CRC}(D)$

$P_0, P_1, P_2, P_3, ..., \text{and } P_L$

$a_0, a_1, a_2, a_3, ..., \text{and } a_{A-1} \parallel P_0, P_1, P_2, P_3, ..., \text{and } P_L$

$b_0, b_1, b_2, b_3, ..., \text{and } b_{B-1}$

FIG. 5

Scrambled by using an RNTI
of a first terminal device

| Data (with a length of A) | 8 bits | 16 bits |
|---|---|---|

CRC 24 bits

FIG. 6

| Data (with a length of A) | X bits | Y1 (Scrambled by using a first identifier) | Y2 (Scrambled by using a second identifier) |
|---|---|---|---|

CRC X+Y1 bits

| Data (with a length of A) | X bits | First information field | Second information field |
|---|---|---|---|

FIG. 7

FIG. 8

900

Communication apparatus

901

Transceiver
unit

902

Processing
unit

FIG. 9

1000

Communication apparatus

1001

Transceiver

1002

Processor

1004

1003

Memory

FIG. 10

## INTERNATIONAL SEARCH REPORT

| International application No. |
| --- |
| **PCT/CN2024/105553** |

**A. CLASSIFICATION OF SUBJECT MATTER**

H04W 72/40(2023.01)i

According to International Patent Classification (IPC) or to both national classification and IPC

**B. FIELDS SEARCHED**

Minimum documentation searched (classification system followed by classification symbols)

IPC：H04W

Documentation searched other than minimum documentation to the extent that such documents are included in the fields searched

Electronic data base consulted during the international search (name of data base and, where practicable, search terms used)

CNABS, CNTXT, DWPI, ENTXT, VEN, WPABS, CJFD, CNKI, IEEE, 3GPP: 网络设备, 下行控制, 上行, 侧行, 调度, 资源, 加扰, 解扰, 解码, DCI, Uu, UE, PUSCH, PTSCH, PSSCH, SCI, sidelink, CRC, Scrambling, descrambling

**C. DOCUMENTS CONSIDERED TO BE RELEVANT**

| Category* | Citation of document, with indication, where appropriate, of the relevant passages | Relevant to claim No. |
| --- | --- | --- |
| X | CN 114731684 A (HUAWEI TECHNOLOGIES CO., LTD.) 08 July 2022 (2022-07-08) description, paragraphs [0051]-[0225] | 1, 10-16, 24-35 |
| A | CN 116671207 A (HUAWEI TECHNOLOGIES CO., LTD.) 29 August 2023 (2023-08-29) entire document | 1-36 |
| A | US 2018069618 A1 (PANASONIC INTELLECTUAL PROPERTY CORPORATION OF AMERICA) 08 March 2018 (2018-03-08) entire document | 1-36 |
| A | US 2020252957 A1 (HUAWEI TECHNOLOGIES CO., LTD.) 06 August 2020 (2020-08-06) entire document | 1-36 |
| A | WO 2022094935 A1 (GUANGDONG OPPO MOBILE TELECOMMUNICATIONS CORP., LTD.) 12 May 2022 (2022-05-12) entire document | 1-36 |

☐ Further documents are listed in the continuation of Box C. ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **16 August 2024** | **14 September 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/105553** |

| Patent document cited in search report | | | Publication date (day/month/year) | Patent family member(s) | | | Publication date (day/month/year) |
| --- | --- | --- | --- | --- | --- | --- | --- |
| CN | 114731684 | A | 08 July 2022 | None | | | |
| CN | 116671207 | A | 29 August 2023 | None | | | |
| US | 2018069618 | A1 | 08 March 2018 | US | 10411789 | B2 | 10 September 2019 |
| US | 2020252957 | A1 | 06 August 2020 | US | 11368974 | B2 | 21 June 2022 |
| WO | 2022094935 | A1 | 12 May 2022 | None | | | |

Form PCT/ISA/210 (patent family annex) (July 2022)

**EP 4 757 477 A1**

REFERENCES CITED IN THE DESCRIPTION

**Patent documents cited in the description**

- CN 202311128795X